# EUROPEAN PATENT APPLICATION

(11) **EP 4 650 973 A1**
(43) Date of publication of application: **19.11.2025**
(21) Application number: 24837835.8
(22) Date of filing: 30.05.2024
(51) Int. Cl.: G06F 12/1009, G06F 12/02, G06F 13/16

(54) **MEMORY PAGE ACCESS METHOD AND RELATED DEVICE**

(30) Priority: 29.03.2024 CN 202410381176
(71) Applicant: Hygon Information Technology Co., Ltd., Tianjin 300392 (CN)
(72) Inventor: ZENG, Feng, Tianjin 300392 (CN); ZHANG, Huajuan, Tianjin 300392 (CN)
(74) Representative: Regimbeau
(86) International application number: PCT/CN2024/096209
(87) International publication number: WO 2025/200118

(57) **Abstract**

Embodiments of the present disclosure provide a method for memory page access and related devices. The method includes: acquiring a target access command in a command queue, where the target access command at least includes a target physical address corresponding to a target memory page, the command queue stores access commands to be executed, and the access commands to be executed include a physical address to be accessed corresponding to a memory page to be accessed; acquiring page history information corresponding to the target physical address in a page table; determining a first page policy according to the physical address to be accessed and the target physical address; determining a second page policy according to the page history information; and determining one page policy from the first page policy and the second page policy as a target page policy to be sent, to generate a corresponding memory access command based on the target page policy, thereby improving the efficiency of memory access.

## Description

The present application claims the priority to Chinese Patent Application No. 202410381176.X, filed on March 29, 2024, the entire disclosure of which is incorporated herein by reference as portion of the present application.

### TECHNICAL FIELD

Embodiments of the present disclosure relate to a method for memory page access and related devices.

### BACKGROUND

Memory is a component of a computer used to store data and programs, and is an important part of the computer. The smallest unit of memory storage is a column, a plurality of columns form a row, and data can be stored into memory in units of pages/rows. During the operation of a computer, based on the data storage function of the memory page, the memory page can be accessed to perform corresponding operations on the data, such as reading and writing operations on the data. In this context, how to improve the access efficiency of the memory has become a technical problem that needs to be solved by those skilled in the art.

### SUMMARY

In view of the above, embodiments of the present disclosure provide a method for memory page access and related devices to realize improved access efficiency of memory.

To achieve the above purposes, the embodiments of the present disclosure provide the following technical solutions.

The embodiments of the present disclosure provide a method for memory page access, and the method includes:
acquiring a target access command in a command queue, where the target access command at least includes a target physical address corresponding to a target memory page, the command queue stores access commands to be executed, and the access commands to be executed include a physical address to be accessed corresponding to a memory page to be accessed;
acquiring page history information corresponding to the target physical address in a page table;
determining a first page policy according to the physical address to be accessed and the target physical address, where the first page policy indicates a hit decision for the memory page to be accessed corresponding to the target physical address;
determining a second page policy according to the page history information, where the second page policy indicates a hit decision corresponding to the target memory page predicted based on the page history information; and
determining one page policy from the first page policy and the second page policy as a target page policy to be sent, to generate a corresponding memory access command based on the target page policy.

Optionally, the determining the first page policy according to the physical address to be accessed and the target physical address includes:
comparing the physical address to be accessed with the target physical address to obtain an address comparison result; and
determining the first page policy based on the address comparison result.

Optionally, the physical address includes a chip select address, a bank address, and a page address; and
the comparing the physical address to be accessed with the target physical address includes: comparing a chip select address in the physical address to be accessed with a chip select address in the target physical address, a bank address in the physical address to be accessed with a bank address in the target physical address, and a page address in the physical address to be accessed with a page address in the target physical address, respectively.

Optionally, the first page policy includes an open page policy, a close page policy, and an unrelated policy;
if the chip select address, the bank address, and the page address in the physical address to be accessed are identical to the chip select address, the bank address, and the page address in the target physical address, the open page policy is determined;
if the chip select address and the bank address in the physical address to be accessed are identical to the chip select address and the bank address in the target physical address, but the page address in the physical address to be accessed is different from the page address in the target physical address, the close page policy is determined; and
if the chip select address in the physical address to be accessed is identical to the chip select address in the target physical address, but the bank address in the physical address to be accessed is different from the bank address in the target physical address, or if the chip select address in the physical address to be accessed is different from the chip select address in the target physical address, but the bank address in the physical address to be accessed is identical to the bank address in the target physical address, the unrelated policy is determined.

Optionally, the determining one page policy from the first page policy and the second page policy as the target page policy to be sent includes: in response to the first page policy having a higher priority than the second page policy, determining the first page policy from the first page policy and the second page policy as the target page policy to be sent.

Optionally, the determining one page policy from the first page policy and the second page policy as the target page policy to be sent further includes: in response to the first page policy being the unrelated policy, determining the second page policy from the first page policy and the second page policy as the target page policy to be sent.

Optionally, the determining the second page policy according to the page history information includes:
determining a first value and a second value according to the page history information, where the first value is obtained by performing a weighted summation of the page history information with an information type corresponding to the page history information as a weight, and the second value is obtained by adjusting an initial value according to the information type corresponding to the page history information; and
comparing the first value and the second value to determine the second page policy.

Optionally, the page history information includes page history hit information, page history conflict information, and page history miss information.

Optionally, when performing the weighted summation of the page history information with the information type corresponding to the page history information as a weight,
if a page address of a previous access command of the target access command recorded in the page history information is identical to a page address of the target access command, a weight of the page history hit information is taken as a weight of the page history miss information to perform the weighted summation of the page history information with the information type corresponding to the page history information as a weight, to obtain the first value; or
if the page address of the previous access command of the target access command recorded in the page history information is different from the page address of the target access command, a weight of the page history conflict information is taken as the weight of the page history miss information to perform the weighted summation of the page history information with the information type corresponding to the page history information as a weight, to obtain the first value.

Optionally, the adjusting the initial value according to the information type corresponding to the page history information includes:
in response to page history hit information being added to the page history information, decreasing the initial value correspondingly by a preset proportion, where a total number of times the initial value is decreased by the preset proportion corresponds to a total number of times the page history hit information is added; and
in response to page history conflict information and/or page history miss information being added to the page history information, increasing the initial value correspondingly by the preset proportion, where a total number of times the initial value is increased by the preset proportion corresponds to a total number of times the page history conflict information and/or the page history miss information is added.

Optionally, the second page policy includes an open page policy and a close page policy;
the comparing the first value and the second value to determine the second page policy includes:
based on a forward calculation of a page hit, determining the open page policy in response to the first value being greater than or equal to the second value, and determining the close page policy in response to the first value being less than the second value; or
based on a reverse calculation of a page hit, determining the open page policy in response to the first value being less than the second value, and determining the close page policy in response to the first value being greater than or equal to the second value.

Optionally, while performing the acquiring the target access command in the command queue, the method further includes:
sending the target access command to the page table to cause the page table to record access information corresponding to the target physical address, and comparing whether a command type of the target access command is identical to a command type of a recorded history access command; and in response to the command type of the target access command being different from the command type of the recorded history access command, clearing recorded access information corresponding to the history access command.

Optionally, the acquiring the target access command in the command queue includes:
acquiring the target access command from the access commands to be executed stored in the command queue according to access priority and/or address access efficiency of the access commands to be executed.

The embodiments of the present disclosure further provide an arbitration module, which includes:
a command acquisition unit, configured to acquire a target access command in a command queue, where the target access command at least includes a target physical address corresponding to a target memory page, the command queue stores access commands to be executed, and the access commands to be executed include a physical address to be accessed corresponding to a memory page to be accessed;
an information acquisition unit, configured to acquire page history information corresponding to the target physical address in a page table;
a first determination unit, configured to determine a first page policy according to the physical address to be accessed and the target physical address, where the first page policy indicates a hit decision for the memory page to be accessed corresponding to the target physical address;
a second determination unit group, configured to determine a second page policy according to the page history information, where the second page policy indicates a hit decision corresponding to the target memory page predicted based on the page history information; and
a policy determination unit, configured to determine one page policy from the first page policy and the second page policy as a target page policy to be sent, to generate a corresponding memory access command based on the target page policy.

Optionally, the first determination unit determining the first page policy according to the physical address to be accessed and the target physical address includes:
comparing the physical address to be accessed with the target physical address to obtain an address comparison result; and
determining the first page policy based on the address comparison result.

Optionally, the second determination unit group includes a page history information calculation unit and a page hit prediction unit;
the page history information calculation unit is configured to determine a first value and a second value according to the page history information, where the first value is obtained by performing a weighted summation of the page history information with an information type corresponding to the page history information as a weight, and the second value is obtained by adjusting an initial value according to the information type corresponding to the page history information; and
the page hit prediction unit is configured to compare the first value and the second value to determine the second page policy.

Optionally, the command acquisition unit is further configured to:
send the target access command to the page table to cause the page table to record access information corresponding to the target physical address, and compare whether a command type of the target access command is identical to a command type of a recorded history access command; and in response to the command type of the target access command being different from the command type of the recorded history access command, clear recorded access information corresponding to the history access command.

The embodiments of the present disclosure further provide a method for memory page access, including:
acquiring a target page policy, where the target page policy is one page policy determined from a first page policy and a second page policy, the first page policy is determined according to a physical address to be accessed and a target physical address, and the second page policy is determined according to page history information; the target physical address is based on a target access command acquired in an command queue, the target access command at least includes the target physical address corresponding to a target memory page, the command queue stores access commands to be executed, the access commands to be executed include the physical address to be accessed corresponding to a memory page to be accessed, and the page history information is acquired in a page table based on the corresponding target physical address; and
generating a corresponding memory access command based on the target page policy.

The embodiments of the present disclosure further provide a command generation module, including:
a target policy acquisition unit, configured to acquire a target page policy, where the target page policy is one page policy determined from a first page policy and a second page policy, the first page policy is determined according to a physical address to be accessed and a target physical address, and the second page policy is determined according to page history information; the target physical address is based on a target access command acquired in an command queue, the target access command at least includes the target physical address corresponding to a target memory page, the command queue stores access commands to be executed, the access commands to be executed include the physical address to be accessed corresponding to a memory page to be accessed, and the page history information is acquired in a page table based on the corresponding target physical address; and
a memory access command generation unit, configured to generate a corresponding memory access command based on the target page policy.

The embodiments of the present disclosure further provide a memory controller, including an arbitration module and a command generation module;
the arbitration module is configured to: acquire a target access command in a command queue, the target access command at least includes a target physical address corresponding to a target memory page, the command queue stores access commands to be executed, and the access commands to be executed include a physical address to be accessed corresponding to a memory page to be accessed; acquire page history information corresponding to the target physical address in a page table; and send a target page policy based on the target physical address and the page history information; and
the command generation module is configured to acquire the target page policy, and generate a corresponding memory access command based on the target page policy.

The embodiments of the present disclosure further provide a memory system, including a memory controller according to any one of the above-mentioned embodiments.

The embodiments of the present disclosure further provide an electronic device, including at least one memory and at least one processor; the at least one memory stores one or more computer-executable instructions, and the at least one processor invokes the one or more computer-executable instructions to perform the method for memory page access according to any one of the above-mentioned embodiments.

The embodiments of the present disclosure further provide a storage medium, storing one or more computer-executable instructions, where the one or more computer-executable instructions, when executed, implement the method for memory page access according to any one of the above-mentioned embodiments.

The embodiments of the present disclosure further provide a computer program product, including one or more computer-executable instructions, where the one or more computer-executable instructions, when executed, implement the method for memory page access according to any one of the above-mentioned embodiments.

The embodiments of the present disclosure provide a method for memory page access, by acquiring a target access command in a command queue, where the target access command at least includes a target physical address corresponding to a target memory page, the command queue stores access commands to be executed, and the access commands to be executed include a physical address to be accessed corresponding to a memory page to be accessed; and acquiring page history information corresponding to the target physical address in a page table; thereby determining a first page policy according to the physical address to be accessed and the target physical address; and determining a second page policy according to the page history information; so that determining one page policy from the first page policy and the second page policy as a target page policy to be sent, to generate a corresponding memory access command based on the target page policy.

The target page policy sent by the embodiments of the present disclosure, taking into account the access commands stored in the command queue, and the page history information of the target physical address included in the target access command, makes the determination of the target page policy more flexible, so as to be able to dynamically adjust the memory page configuration; thus, when generating the corresponding memory access command based on the target page policy, the latency of the memory access can be reduced and the efficiency of the memory access can be improved.

### BRIEF DESCRIPTION OF DRAWINGS

To more clearly illustrate the technical solutions in the embodiments of the present disclosure, the following will briefly introduce the drawings that need to be used in the description of the embodiments. It is obvious that the drawings in the following description are only some of the embodiments described in the present disclosure, and for those skill in the art, other drawings can be obtained according to these drawings without creative labor.
Fig. 1 is a schematic flowchart for memory page access;
Fig. 2 is an optional schematic flowchart of a method for memory page access provided by the embodiments of the present disclosure;
Fig. 3 is an optional schematic structural diagram of a page table provided by the embodiments of the present disclosure;
Fig. 4 is another optional schematic flowchart of a method for memory page access provided by the embodiments of the present disclosure;
Fig. 5 is an optional schematic structural diagram of a memory controller provided by the embodiments of the present disclosure;
Fig. 6 is yet another optional schematic flowchart of a method for memory page access provided by the embodiments of the present disclosure;
Fig. 7 is an optional schematic structural diagram of a command generation module provided by the embodiments of the present disclosure;
Fig. 8 is an optional schematic structural diagram of a memory system provided by the embodiments of the present disclosure; and
Fig. 9 is an optional block diagram of an electronic device provided by the embodiments of the present disclosure.

### DETAILED DESCRIPTION

The technical solutions in the embodiments of the present disclosure will be described clearly and completely in the following in conjunction with the drawings in the embodiments of the present disclosure, and it is clear that the described embodiments are only a part of the embodiments of the present disclosure, and not all of the embodiments. Based on the embodiments in the present disclosure, all other embodiments obtained by a person of ordinary skill in the art without making creative labor fall within the scope of protection of the present disclosure.

Memory is a component of a computer used to store data and programs, and is an important part of the computer. With the development of computer technology, Double Data Rate (DDR) memory, such as Double Data Rate Synchronous Dynamic Random Access Memory (DDR SDRAM), is widely used in memory. Moreover, based on the continuous improvement of memory technology, DDR memory particles have also been derived, e.g., DDR4 (Double Data Rate 4, i.e., the 4th generation DDR memory) and DDR5 (Double Data Rate 5, i.e., the 5th generation DDR memory) memory particles. In an optional implementation, DDR SDRAM may also be abbreviated as DDR.

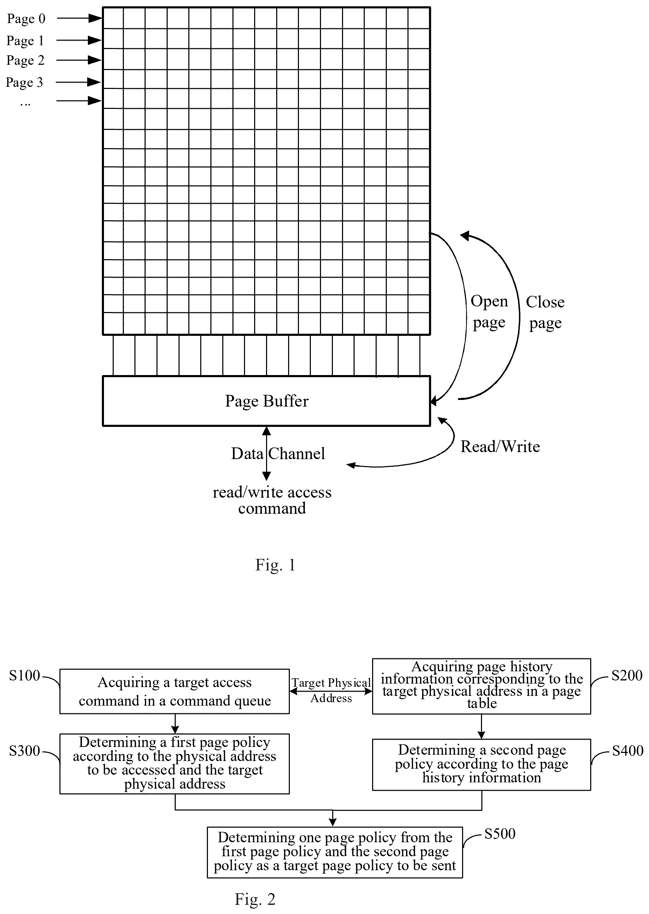

In DDR, data is stored in pages/rows, the area where the data is stored is called a bank, and each bank corresponds to a page buffer that can temporarily store one row/page of data within the bank. Fig. 1 is a schematic flowchart for memory page access, in which the grid part is the bank. The read/write access commands are transmitted to the DDR through a data channel, and when performing read/write accesses on the DDR, the memory page cannot be accessed directly, but the page buffer corresponding to the bank needs to be accessed, where the data corresponding to the page to be accessed is first loaded into the page buffer, and then the data read or write operation is performed based on the page buffer.

Moreover, in DDR, the smallest unit of memory addressable is a column, and as shown in Fig. 1, one page (row) can correspond to data in a plurality of columns. When the memory reads commands in a concurrent form, such as DDR4, eight columns of data in a row can be read at once into the page buffer according to the actual column address specified by the command.

As an optional implementation, when the page corresponding to the data loaded by the bank into the page buffer corresponds to the page that accessed the access command for the bank, it is referred to as a page hit.

As an optional implementation, when the page corresponding to the data loaded by the bank into the page buffer differs from the page that accessed the access command for the bank, it is referred to as a page conflict.

As an optional implementation, when the bank does not load data corresponding to any page into the page buffer, it is referred to as a page miss.

When the page corresponding to the data loaded by the bank into the page buffer corresponds to the page that accessed the access command for the bank, that is, a page hit, the corresponding data can be read/written from the page buffer correspondingly; when the bank does not load data corresponding to any page into the page buffer, that is, a page miss, a corresponding page needs to be opened. In an optional example, the page may be opened utilizing the Activate command, and the data of the corresponding page is loaded into the page buffer, so that the read or write operation may be performed based on the data in the page buffer; when the page corresponding to the data loaded by the bank into the page buffer differs from the page that accessed the access command for the bank, that is, a page conflict, the opened page needs to be closed first. In an optional example, the page may be closed utilizing the Precharge command, and the data of the corresponding page is loaded to page buffer, so that the read or write operation on the data may be performed based on the data in the page buffer.

It should be noted that, based on the continuous improvement of memory technology, the derived DDR4 (Double Data Rate 4, i.e., the 4th generation DDR memory) and DDR5 (Double Data Rate 5, i.e., the 5th generation DDR memory) protocols can support automatically closing a memory page after performing data read or write operation on the memory page, that is, using the Auto Precharge command. Corresponding to the data read command and data write command, the Auto Precharge command may be the Read Auto Precharge (RdAp) command and the Write Auto Precharge (WrAp) command, respectively. In this case, the policy of using RdAp/WrAp to automatically close memory pages may be referred to as a close page policy. Conversely, the policy of keeping memory pages open may be referred to as an open page policy.

It should be understood that in a memory system, the Activate command for opening a memory page and the Precharge command for closing the page consume a certain amount of memory power. This is mainly because the Activate command and the Precharge command need to send signals to the memory chip through the memory controller, which results in current flow and voltage changes. Moreover, the sending of the Activate command and the Precharge command also requires a certain amount of time to complete the opening and closing of the memory page, which increases the latency of memory access and reduces the efficiency of memory access.

To reduce the memory power consumption and access latency, as an optional implementation, the close page policy may be adopted for the memory, that is, after each read/write access of the memory, the currently accessed page is closed by the Auto Precharge command. By adopting the close page policy, for memory accesses with poor spatial locality, that is, memory accesses with the possibility of accessing nearby memory spaces, a page conflict may be effectively avoided and latency of memory access and bandwidth can be reduced. However, the adoption of the close page policy does not recognize a memory access with better spatial locality, that is, it does not recognize the tendency to access data with a closer address in the memory space during a memory access, which results in the inability to improve a page hit rate, and the improvement of the efficiency of memory accesses is not obvious.

Thus, to improve the page hit rate and improve the efficiency of memory access, as an optional implementation, a static open page policy or close page policy may be applied to the memory, that is, after the read/write operation of data is performed on a memory page, the memory page is kept in an open state or the memory page is kept in a closed state. However, not all access commands are for only one fixed memory page, which makes the improvement of the efficiency of memory access using the static open page policy not high; and when the memory page is in the closed state, it does not improve the page hit rate, which makes the improvement of the efficiency of memory access using the static close page policy also not high. Moreover, when the page is in the closed state, it is still necessary to send the Activate command to open the memory page, which to some extent also increases the latency of memory access.

Thus, it is particularly important to realize how to access the memory page and improve the efficiency of memory access.

In view of this, the embodiments of the present disclosure provide an improved scheme for memory page access, which determines a target page policy by comprehensively considering access commands stored in a command queue, and page history information of a target physical address, so as to make the determination of the target page policy more flexible, thereby dynamically adjusting the page configuration; and thus, when generating corresponding memory access commands based on the target page policy, it is possible to reduce the latency of memory access and improve the efficiency of memory access.

Based on the above ideas, Fig. 2 shows an optional schematic flowchart of a method for memory page access provided by the embodiments of the present disclosure, and the method for memory page access may be implemented by a memory controller. As shown in Fig. 2, the method for memory page access includes the following steps.

Step S100: acquiring a target access command in a command queue.

When an upstream device sends an access command for accessing the memory to the memory controller, the memory controller may store the memory access command to a command queue. Because the upstream device may send a plurality of access commands to the memory controller simultaneously, the command queue may store a plurality of access commands to be executed, and the access commands to be executed may include a physical address to be accessed corresponding to the memory page to be accessed.

As an optional implementation, based on the plurality of access commands to be executed stored in the command queue, a target access command may be acquired from the access commands to be executed stored in the command queue according to the access priority of the access commands to be executed. The target access command at least includes a target physical address corresponding to a target memory page.

Step S200: acquiring page history information corresponding to the target physical address in a page table.

The page table may store access history information for each bank page of the memory for predicting the status of a future memory access, such as a page hit, page miss, or page conflict. The page table may include a plurality of memory units, each memory unit storing information that may be, for example, the specific address of the current bank, whether the bank is in an active state (buffer loaded with data for a particular row of the memory), and the row address loaded when the page table is opened by the most recent Activate command. The row address is not cleared after the bank is closed by a Precharge command, and remains until it is directly overwritten with a new row address by the next Activate command. The access history information may include a history status code, and the history status of the access memory page may be determined based on the history status code, where different history status code may indicate the page hit, page conflict, page miss (including a page miss but the row address of the previously opened bank is the same as the current command, or a page miss but the row address of the previously opened bank is different from the current command), respectively. Furthermore, history age information of the memory page may be maintained in the access history information. The history age information refers to the type of access status information (e.g., hit, miss, conflict) of the corresponding memory page, as of the current time, the length of time recorded in the page history information.

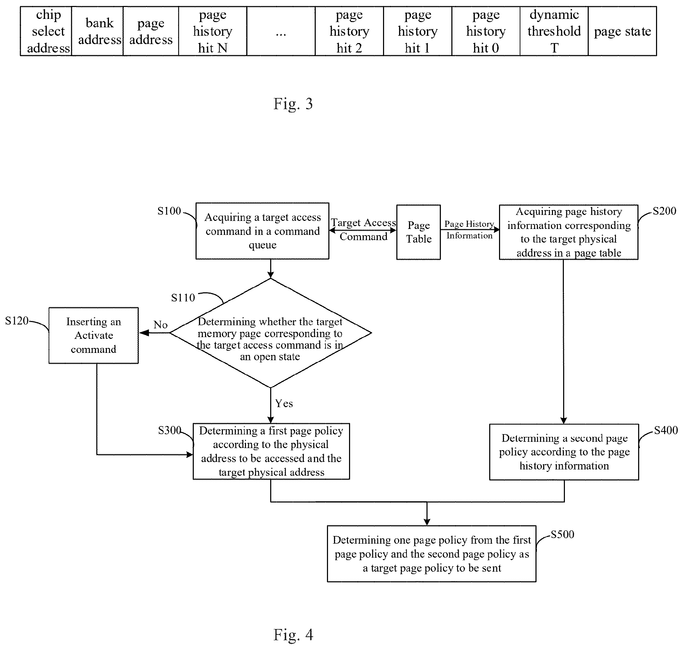

In an optional implementation, based on the storage function of the page table for the access history information of each bank page, Fig. 3 exemplarily illustrates an optional schematic structural diagram of a page table. As shown in Fig. 3, the page table may record a chip select address, a bank address, a page address of the corresponding memory page in an access command, as well as the page history hit information of the corresponding memory page. For example, if the page table records the page history information of N+1 access commands, then there may be corresponding N+1 pieces of page history hit information, namely page history hit 0, page history hit 1, page history hit 2, ......, page history hit N, and the page state corresponding to the respective access command.

Thus, based on the storage function of the page table for the access history information of each bank page, it is possible to acquire the page history information corresponding to the target physical address in the page table based on the acquired target access command.

Step S300: determining a first page policy according to the physical address to be accessed and the target physical address.

The first page policy may indicate a hit decision for the memory page to be accessed corresponding to the target physical address, to reduce the probability of occurrence of the page miss and conflict of the memory page and increase the probability of the page hit.

Because the target physical address is included in the target access command, based on the acquisition of the target access command, a memory access process may be executed using the target access command; and the physical address to be accessed is included in an access command to be executed stored in a command queue, so that based on the relation of the physical address to be accessed with the target physical address, such as, the physical address to be accessed is the same as the target physical address, rules and decisions may be determined for the memory page to reduce the probability of occurrence of the page miss and conflict of the memory page and increase the probability of the page hit, that is, the first page policy is determined according to the physical address to be accessed and the target physical address.

As an optional implementation, the first page policy may be decision information to configure the use of the Auto Precharge command to keep the memory page open or automatically close, or not to operate, etc., based on the execution of the target access command, out of consideration for the increase of the probability of the page hit.

Step S400: determining a second page policy according to the page history information.

The second page policy may indicate a hit decision corresponding to the target memory page predicted based on the page history information, to reduce the probability of occurrence of the page miss and conflict of the memory page and increase the probability of the page hit.

Because the page table stores access history information of each bank page, the second page policy may thus be determined according to the page history information recorded in the page table.

As an optional implementation, the second page policy may be decision information to configure the use of the Auto Precharge command to keep the memory page open or automatically close, etc., based on the execution of the target access command, out of consideration for the increase of the probability of the page hit.

Step S500: determining one page policy from the first page policy and the second page policy as a target page policy to be sent.

Based on the determined first page policy and the second page policy, one page policy may be further determined among the first page policy and the second page policy as a target page policy to be sent to an external party, so that based on the acquired target page policy, a corresponding memory access command may be generated to perform a memory access based on the generated memory access command. When a data operation corresponding to the memory page is executed, the memory page state may be automatically configured to be opened or closed according to the target page policy, which can reduce the power consumption and latency of the memory access and realize the improvement of the efficiency of memory access, relative to the way of the static open page policy or close page policy.

In the embodiments of the present disclosure, when determining the target page policy based on the acquired target access command, the access commands stored in the command queue and the page history information of the target physical address are comprehensively considered, which makes the determination of the target page policy more flexible, and thus enables dynamic adjustment of the memory page configuration. In turn, when generating the corresponding memory access command based on the target page policy, the latency of memory access can be reduced and the efficiency of memory access can be improved.

In some embodiments, because the first page policy can indicate a hit decision for the memory page to be accessed corresponding to the target physical address, it reduces the probability of occurrence of the page miss and conflict of the memory page and increases the probability of the page hit. Therefore, when determining the first page policy based on the physical address to be accessed and the target physical address, it may be specifically by comparing the physical address to be accessed with the target physical address to obtain an address comparison result, and then determining the first page policy based on the address comparison result.

Further, in some embodiments, the physical address is used to uniquely identify a specific location in the memory, and may include a chip select address, a bank address, and a page address.

The chip select address is used to select a memory chip or a memory module. In a memory including a plurality of memory chips, each chip has a unique chip select address. With the chip select address, a specific chip to be accessed can be determined.

The bank address is used to select a corresponding bank in the memory chip. With the bank address, a specific bank to be accessed can be determined.

The page address is used to select a specific page in the bank. With the page address, a specific page to be accessed can be determined.

Based on the chip select address, bank address and page address included in the physical address, when comparing the physical address to be accessed with the target physical address, it is possible to respectively compare the chip select address in the physical address to be accessed with the chip select address in the target physical address; to respectively compare the bank address in the physical address to be accessed with the bank address in the target physical address; and to respectively compare the page address in the physical address to be accessed with the page address in the target physical address.

In some embodiments, because the determination of the first page policy considers the relation between the physical address to be accessed and the target physical address, the first page policy may include an open page policy, a close page policy, and an unrelated policy. Based on the access execution of the memory page corresponding to the target physical address and the relation between the physical address to be accessed and the target physical address, the open page policy indicates the memory page accessed by the target access command to remain in an open state after the operation has been executed; the close page policy indicates the memory page accessed by the target access command to be in a closed state after the operation has been executed; and the unrelated policy indicates the memory page accessed by the target access command is unrelated to the memory page corresponding to the access command stored in the command queue, such as, all pages within the bank address corresponding to the target access command are in the closed state relative to the access command stored in the command queue.

Based on the physical address including the chip select address, bank address, and page address, when determining the first page policy based on the address comparison result between the target physical address and the physical address to be accessed, as an optional implementation, if the chip select address, the bank address and the page address in the physical address to be accessed are identical to the chip select address, the bank address and the page address in the target physical address, the open page policy may be determined. The chip select address, the bank address and the page address of the physical address to be accessed being identical to the chip select address, the bank address and the page address in the target physical address indicates that the physical address to be accessed corresponds to the same memory page of the same bank of the same memory chip as the target physical address, and after accessing the memory page according to the target physical address, the memory page may be kept in an open state so as to facilitate subsequent access to the memory page according to the physical address to be accessed, so that it may be determined as an open page policy.

As another optional implementation, if the chip select address and the bank address in the physical address to be accessed are identical to the chip select address and the bank address in the target physical address, but the page address in the physical address to be accessed is different from the page address in the target physical address, the close page policy may be determined. In this case, the chip select address and the bank address of the physical address to be accessed being identical to the chip select address and the bank address in the target physical address, and the page address of the physical address to be accessed being different from the page address of the target physical address indicates that the physical address to be accessed and the target physical address correspond to different memory pages of the same bank of the same memory chip, and after accessing the memory page according to the target physical address, the memory page may be closed to ensure subsequent data reading/writing, so that it may be determined as a close page policy.

As yet another optional implementation, if the chip select address in the physical address to be accessed is identical to the chip select address in the target physical address, but the bank address in the physical address to be accessed is different from the bank address in the target physical address, or if the bank address in the physical address to be accessed is identical to the bank address in the target physical address, but the chip select address in the physical address to be accessed is different from the chip select address in the target physical address, the unrelated policy may be determined. The chip select address in the physical address to be accessed being identical to the chip select address in the target physical address, and the bank address in the physical address to be accessed being different from the bank address in the target physical address indicates that the physical address to be accessed and the target physical address correspond to different banks of the same memory chip; and the bank address in the physical address to be accessed being identical to the bank address in the target physical address, and the chip select address in the physical address to be accessed being different from the chip select address in the target physical address indicates that the physical address to be accessed and the target physical address correspond to different memory chips. Accordingly, the page address in the physical address to be accessed cannot be identical to the page address in the target physical address, then the memory page of the bank to be accessed by the physical address to be accessed of the access command to be executed is unrelated to the memory page of the bank corresponding to the target physical address, so that it may be determined as an unrelated policy.

It should be noted that a plurality of access commands to be executed may be stored in the command queue, and the access commands to be executed include a physical address to be accessed corresponding to a memory page to be accessed. Therefore, as long as there is at least one access command to be executed in the command queue (i.e., an access command to be executed other than the one selected as the target access command) whose physical address to be accessed has the same chip select address, the same bank address, and the same page address as the target physical address, the first page policy is determined to be an open page policy.

In some embodiments, based on the first page policy indicating the hit decision for the memory page to be accessed corresponding to the target physical address, and a second page policy indicating the hit decision for a corresponding target memory page predicted based on the page history information, so as to improve the hit rate of the memory page, as an optional implementation, the decision importance corresponding to the first page policy is different from the decision importance corresponding to the second page policy, and the first page policy may have a higher priority than the second page policy.

To realize that the priority of the first page policy is higher than the priority of the second page policy, in an optional embodiment, the probability that the target physical address is identical to the physical address to be accessed stored in the command queue may be set to be greater than the ratio of the access commands stored in the command queue, which have the same physical address to be accessed as the target physical address, to the total number of access commands. For example, in the case where the probability that the target physical address is identical to the physical address to be accessed stored in the command queue is set to be 55%, and the ratio of the access commands stored in the command queue, which have the same physical address to be accessed as the target physical address, to the total number of access commands is set to be 50%, and because 55% is greater than 50%, the priority of the first page policy is higher than the priority of the second page policy.

In another optional example, the percentage of the first page policy may be pre-set to be greater than the percentage of the second page policy. For example, the percentage of the first page policy is set to be 60% and the percentage of the second page policy is set to be 40%, because the percentage of the first page policy, i.e., 60%, is greater than the percentage of the second page policy, i.e., 40%, the priority of the first page policy is higher than the priority of the second page policy.

Thus, when determining one page policy from the first page policy and the second page policy as the target page policy to be sent, based on the priority of the first page policy being higher than the priority of the second page policy, it is possible to determine the first page policy from the first page policy and the second page policy as the target page policy to be sent.

As another optional implementation, because the unrelated policy indicates that the memory page accessed by the target access command is not related to the memory page corresponding to the access command stored in the command queue, for improving the hit rate of memory pages, when determining one page policy from the first page policy and the second page policy as the target page policy to be sent, if the first page policy is an unrelated policy, the second page policy is determined from the first page policy and the second page policy as the target page policy to be sent.

It should be noted that the above-mentioned embodiments are only optional implementations for realizing the determination of the target page policy, and corresponding settings may also be made according to the actual needs, as long as it satisfies that one page policy is determined from the first page policy and the second page policy as the target page policy to be sent, and the embodiments of the present disclosure do not limit the specific contents of the implementation of the determination of the target page policy.

In some embodiments, because the second page policy indicates the hit decision for a corresponding target memory page predicted based on the page history information, and the page history information is the recorded status of memory pages corresponding to the execution of the access commands, such as a memory page hit, miss, or conflict, to ensure the accuracy of the determined second page policy, when determining the second page policy based on the page history information, a first value and a second value may first be determined based on the page history information, and then the first value and the second value are compared to determine the second page policy.

Further, in some embodiments, because the page history information is the recorded status of hits to the memory page corresponding to the execution of the access commands, based on the switching state of the memory page, the page history information may include page history hit information, page history conflict information, and page history miss information.

The page history hit information is recorded information of page hit corresponding to the execution of the access commands. The page history conflict information is recorded information of page conflict corresponding to the execution of the access commands. The page history miss information is recorded information of page miss corresponding to the execution of the access commands.

As an optional implementation, when determining the first value and the second value according to the page history information, the first value may be obtained by performing a weighted summation of the page history information with the information type corresponding to the page history information as a weight. For example, the page history hit information, the page history conflict information, and the page history miss information correspond to weight values P1, P2, and P3, respectively; the number of pieces of page history hit information corresponding to the target physical address recorded in the page table is H1, the number of pieces of page history conflict information corresponding to the target physical address recorded in the page table is H2, and the number of pieces of page history error information corresponding to the target physical address recorded in the page table is H3; and by performing the weighted summation, the first numerical value is obtained as A = ΣPiHi, and Pi is P1, P2, or P3, each of which may be a value in the range of [0,1], and Hi is H1, H2, or H3. The greater the weight, the greater the impact on the summation, and the weighted summation may reflect the extent to which the information type corresponding to the page history information contributes to the summation, which indicates that the hit rate recorded in the page history information for the memory page is relatively high, and reflects the short-term expectation of the memory page being continuously hit.

It should be noted that, in the method by which the first value is obtained through weighted summation in the embodiments of the present disclosure, the selection of weights may also take other forms based on actual needs and is not limited to using the information type corresponding to the page history information as the weight. For example, different weights may be set according to the duration of time of corresponding information types recorded in the page history information (i.e., different weights are assigned based on the historical age of the corresponding information types), in which information with shorter intervals may be given a higher weight value, and information with longer intervals may be given a lower weight value. The selection of multiple dimensions for weights facilitates the weighted summation of the page history information into a multi-dimensional weighted summation form, avoiding the situation where a single weight value is zero.

In a further embodiment, when performing the weighted summation of the page history information to obtain the first value with the information type corresponding to the page history information as a weight, if the page address of a previous access command of the target access command recorded in the page history information is identical to the page address of the target access command, the weight of the page history hit information is taken as the weight of the page history miss information to perform the weighted summation of the page history information with the information type corresponding to the page history information as a weight, to obtain the first value. The page address of the previous access command being identical to the page address of the target access command indicates that the user has repeatedly accessed the same page, which allows the use of the weight of the page history hit information as the weight of the page history miss information, thereby achieving a more accurate assessment of the hit probability of the memory page corresponding to the target access command.

If the page address of the previous access command of the target access command recorded in the page history information is different from the page address of the target access command, the weight of the page history conflict information is taken as the weight of the page history miss information to perform the weighted summation of the page history information with the information type corresponding to the page history information as a weight, to obtain the first value. The page address of the previous access command being different from the page address of the target access command indicates that the user's target access command is directed at another memory page. Thus, the weight of the page history conflict information can be used as the weight of the page history miss information, thereby achieving a more accurate assessment of the conflict probability of the memory page corresponding to the target access command.

The second value may be obtained by adjusting an initial value according to the information type corresponding to the page history information. The initial value may be a threshold related to the page hit information set based on the initialization of the system. By adjusting the initial value according to the information type corresponding to the page history information, a cumulative expectation of the number of times a memory page being continuously hit over a longer period of time may be reflected. The larger this initial value, the greater the expected conflict/miss of the memory page over a longer period of time; conversely, the smaller the expectation.

Based on the execution of the access command, when the initial value is adjusted according to the information type corresponding to the page history information, as an optional implementation, in response to page history hit information being added to the page history information, the initial value may be correspondingly decreased by a preset proportion. For example, the initial value is 10, and when page history hit information is recorded once in the page table, 10 is correspondingly decreased by 1 to obtain a second value T of 9. The number of times the initial value is decreased by the preset proportion may correspond to the number of times the page history hit information is added.

As another optional implementation, in response to page history conflict information and/or page history miss information being added to the page history information, the initial value may be correspondingly increased by the preset proportion. For example, the initial value is 10, and when page history conflict information or page history miss information is recorded once in the page table, 10 is correspondingly increased by 2 to obtain a second value T of 12. The number of times the initial value is increased by the preset proportion corresponds to the number of times the page history conflict information and/or the page history miss information is added.

It should be understood that, because the determination of the second value is associated with the page history information recorded in the page table, the second value obtained by adjusting the initial value according to the information type corresponding to the page history information is a dynamic threshold dynamically adjusted based on the initial value. The maximum value of the second value may be associated with the number of memory accesses, for example, the maximum value of the second value is ΣHi, and the minimum value of the second value may be 0.

It should be noted that, based on the information storage function of the page table, to facilitate the adjustment of the initial value according to the information type corresponding to the page history information, the second value serving as the dynamic threshold may be recorded in the page table corresponding to the execution of an access command, as shown in Fig. 3, recorded as the dynamic threshold T. The specific content of the page table in the embodiments of the present disclosure may be configured correspondingly according to actual needs, and the embodiments of the present disclosure do not impose limitations on this.

In some embodiments, because the second page policy is formulated based on executed access commands, corresponding to the hit status of the executed access commands, the second page policy may include an open page policy and a close page policy.

The comparing the first value and the second value to determine the second page policy, as an optional implementation, may be based on a forward calculation of a page hit. The forward calculation of the page hit refers to that, for the weighted summation of the corresponding first value, the weight of the page history hit information is greater than that of the page history conflict information and page history miss information. If the calculated first value is greater than or equal to the second value, the open page policy may be determined, indicating a higher probability of a hit on the memory page; and if the first value is less than the second value, the close page policy is determined, indicating a higher probability of a miss or conflict on the memory page.

As another optional implementation, the comparing the first value and the second value to determine the second page policy may be based on a reverse calculation of a page hit. The reverse calculation of the page hit refers to that, for the weighted summation of the corresponding first value, the weight of the page history hit information is less than that of the page history conflict information and page history miss information. If the first value is less than the second value, the open page policy is determined, indicating a higher probability of a hit on the memory page; and if the first value is greater than or equal to the second value, the close page policy is determined, indicating a higher probability of a miss or conflict on the memory page. For example, the weight of the page history hit information is 0; the weight of the page history conflict information is 1; and the weight of the page history miss information is 0.25 or 0.75. In this case, the smaller the first value obtained from the weighted summation, the more the command history information tends to indicate a page hit.

It should be noted that by comparing the first value and the second value to determine the second page policy, if there is an incidental disturbance in the weighted value corresponding to the first value and the threshold corresponding to the second value, the determined second page policy can maintain a certain historical inertia. This prevents rapid switching between different page policies, thereby aligning with the temporal and spatial locality characteristics of memory address access.

In some embodiments, to ensure the accuracy of the page history information recorded in the page table, Fig. 4 exemplarily illustrates another optional schematic flowchart of the method for memory page access of the embodiments of the present disclosure. As shown in Fig. 4, while performing step S100, the target access command may also be sent to the page table. Based on the recording of page history information in the page table, by sending the target access command to the page table, the page table can record the access information corresponding to the target physical address.

It should be noted that the page table, in addition to recording the information of the page hit, may also record the access command type, such as whether the access command belongs to a read command or a write command. Thus, after sending the target access command to the page table, the page table may also compare the command type of the target access command with the command type of the recorded history access command, to clear the recorded access information corresponding to the history access command in response to the command type of the target access command being different from the command type of the recorded history access command. For example, in the case where the currently acquired target access command is a read command and the previously recorded access command in the page table is a write command, a comparison shows that the command type has switched between a write and a read command, so the page table clears all historical page information in the current entry and start re-recording beginning with the target access command that belongs to a read command.

In some embodiments, to smoothly read and write data in a memory page, as shown in Fig. 4, after performing step S100 and before performing step S300, step S110 may also be performed to determine whether the target memory page corresponding to the target access command is in an open state.

By judging the open state of the target memory page corresponding to the target access command, it may be ensured that the required data or instructions are available in the memory.

If the target memory page corresponding to the target access command is in a closed state, that is, the judgment result is "no", step S120 may be further performed to insert an Activate command.

By inserting the Activate command, the corresponding target memory page may be opened, so that the required data or instruction are available in the memory and the corresponding data may be read or written smoothly.

It should be noted that only when the target memory page corresponding to the target access command is determined to be a page hit, the above-mentioned determination of the target page policy may be performed based on the target access command. If the target memory page corresponding to the target access command is a page conflict or a page miss, the above-mentioned process of determining the target page policy is not performed for the target access command, and the next target access command needs to be re-selected from the command queue.

In some embodiments, the target access command may be acquired in a command queue based on an arbitration policy. As an optional implementation, the arbitration policy may include that the priority of an access command to be executed being filtered as the target memory access command is positively correlated with the access priority and/or address access efficiency of the access command to be executed. Thus, a target access command may be acquired from the access commands to be executed stored in the command queue according to the access priority and/or address access efficiency of the access commands to be executed.

It should be noted that the above-mentioned example of acquiring the target access command is only an optional implementation. The embodiments of the present disclosure may also acquire the target access command in the command queue according to other policies, which may be correspondingly configured according to the actual situation, and the present disclosure does not impose limitations on this.

In the embodiments of the present disclosure, when determining the target page policy based on the acquired target access command, the access commands stored in the command queue and the page history information of the target physical address are comprehensively considered, which makes the determination of the target page policy more flexible, and thus enables dynamic adjustment of the memory page configuration. In turn, when generating the corresponding memory access command based on the target page policy, the latency of memory access can be reduced and the efficiency of memory access can be improved.

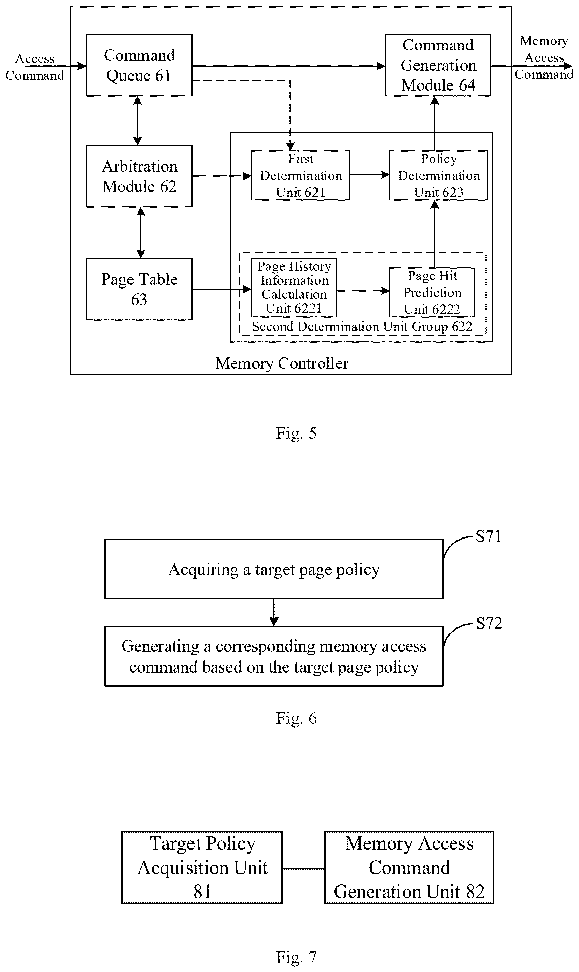

Under the principle of the method flow shown in Fig. 2, as an optional architectural implementation of a memory controller to realize the method for memory page access, Fig. 5 exemplarily illustrates an optional schematic structural diagram of a memory controller provided by the embodiments of the present disclosure. The content of the device described below may be considered as functional modules to be provided for realizing the method for memory page access provided by the embodiments of the present disclosure. The content described below may be cross-referenced to the content described above.

As shown in Fig. 5 the memory controller may include a command queue 61, an arbitration module 62, and a page table 63.

The command queue 61 is configured to store access commands to be executed sent to the memory controller by an upstream device of the memory controller, such as a CPU, the access commands to be executed may include a physical address to be accessed corresponding to a memory page.

The arbitration module 62 may acquire a target access command currently required to be sent to the memory from the access commands to be executed stored in the command queue through an arbitration policy. In some embodiments, the arbitration policy may include that the priority of an access command to be executed being filtered as the target memory access command is positively correlated with the access priority and/or address access efficiency of the access command to be executed. For example, the arbitration module 62 may acquire the access command with the highest access priority and/or address access efficiency, among the stored access commands to be executed, as the target access command.

The page table 63 records the page history information, which includes information about the access commands performing access to the memory and the status of the memory pages accessed by those access commands. In an optional implementation, the arbitration module may send the acquired target access command to the page table so that the page table records access information corresponding to the target access command. In another optional implementation, the arbitration module may also acquire page history information for the corresponding target access command from the page table.

It should be noted that based on the information transmission between the arbitration module and the command queue and the page table, the method for memory page access performed by the memory controller in the embodiments of the present disclosure may be specifically performed and implemented by the arbitration module. Referring to Fig. 5, the arbitration module 62 includes a command acquisition unit (not shown in the figure), an information acquisition unit (not shown in the figure), a first determination unit 621, a second determination unit group 622, and a policy determination unit 623.

The command acquisition unit is configured to acquire a target access command in a command queue, the target access command at least includes a target physical address corresponding to a target memory page, the command queue stores access commands to be executed, and the access commands to be executed include a physical address to be accessed corresponding to a memory page to be accessed.

The information acquisition unit is configured to acquire page history information corresponding to the target physical address in a page table.

The first determination unit 621 is configured to determine a first page policy according to the physical address to be accessed and the target physical address, and the first page policy indicates a hit decision for the memory page to be accessed corresponding to the target physical address.

The second determination unit group 622 is configured to determine a second page policy according to the page history information, and the second page policy indicates a hit decision corresponding to the target memory page predicted based on the page history information.

The policy determination unit 623 is configured to determine one page policy from the first page policy and the second page policy as a target page policy to be sent, to generate a corresponding memory access command based on the target page policy.

It should be noted that the command acquisition unit, the information acquisition unit, the first determination unit 621, the second determination unit group 622, and the policy determination unit 623 are all provided inside the arbitration module. To facilitate the understanding of the process of the various components in the arbitration module for performing the above-mentioned method for memory page access, in Fig. 5, the first determination unit 621, the second determination unit group 622, and the policy determination unit 623 are shown outside the arbitration module, which does not impose any limitation on the arbitration module in the embodiments of the present disclosure to include the first determination unit, the second determination unit group, and the policy determination module. Moreover, to reflect the acquisition of the target access command and page history information by the arbitration module, the command acquisition unit and the information acquisition unit are not shown within the arbitration module, which does not impose any limitation on the arbitration module in the embodiments of the present disclosure to include the command acquisition unit and the information acquisition unit.

In some embodiments, determining, by the first determination unit 621, the first page policy according to the physical address to be accessed and the target physical address includes:
comparing the physical address to be accessed with the target physical address to obtain an address comparison result; and
determining the first page policy based on the address comparison result.

It should be noted that the first determination unit 621 is included in the arbitration module 62. In Fig. 5, to reflect that the first determination unit 621 compares the physical address to be accessed included in the access commands to be executed stored in the command queue 61 with the target physical address included in the target access command acquired by the arbitration module 62, a dashed arrow is used to indicate that the physical address to be accessed is transmitted to the first determination unit 621.

In some embodiments, the physical address includes a chip select address, a bank address, and a page address.

The step of comparing the physical address to be accessed with the target physical address by the first determination unit 621 includes:
comparing a chip select address in the physical address to be accessed with a chip select address in the target physical address, a bank address in the physical address to be accessed with a bank address in the target physical address, and a page address in the physical address to be accessed with a page address in the target physical address, respectively.

In some embodiments, the first page policy determined by the first determination unit 621 includes an open policy, a close page policy, and an unrelated policy;
if the chip select address, the bank address, and the page address in the physical address to be accessed are identical to the chip select address, the bank address, and the page address in the target physical address, the open page policy is determined;
if the chip select address and the bank address in the physical address to be accessed are identical to the chip select address and the bank address in the target physical address, but the page address in the physical address to be accessed is different from the page address in the target physical address, the close page policy is determined;
and if the chip select address in the physical address to be accessed is identical to the chip select address in the target physical address, but the bank address in the physical address to be accessed is different from the bank address in the target physical address, or if the chip select address in the physical address to be accessed is different from the chip select address in the target physical address, but the bank address in the physical address to be accessed is identical to the bank address in the target physical address, the unrelated policy is determined.

In some embodiments, determining, by the policy determination unit 623, one page policy from the first page policy and the second page policy as the target page policy to be sent includes: in response to the first page policy having a higher priority than the second page policy, determining the first page policy from the first page policy and the second page policy as the target page policy to be sent.

In some embodiments, determining, the policy determination unit 623, one page policy from the first page policy and the second page policy as the target page policy to be sent further includes: in response to the first page policy being the unrelated policy, determining the second page policy from the first page policy and the second page policy as the target page policy to be sent.

In some embodiments, the second determination unit group 622 includes a page history information calculation unit 6221 and a page hit prediction unit 6222.

The page history information calculation unit 6221 is configured to determine a first value and a second value according to the page history information, the first value is obtained by performing a weighted summation of the page history information with an information type corresponding to the page history information as a weight, and the second value is obtained by adjusting an initial value according to the information type corresponding to the page history information.

The page hit prediction unit 6222 is configured to compare the first value and the second value to determine the second page policy.

In some embodiments, the page history information acquired by the information acquisition unit includes page history hit information, page history conflict information, and page history miss information.

As an optional implementation, when performing, by the page history information calculation unit 6221, the weighted summation of the page history information to obtain the first value with the information type corresponding to the page history information as a weight,
if a page address of a previous access command of the target access command recorded in the page history information is identical to a page address of the target access command, a weight of the page history hit information is taken as a weight of the page history miss information to perform the weighted summation of the page history information with the information type corresponding to the page history information as a weight, to obtain the first value; or
if the page address of the previous access command of the target access command recorded in the page history information is different from the page address of the target access command, a weight of the page history conflict information is taken as the weight of the page history miss information to perform the weighted summation of the page history information with the information type corresponding to the page history information as a weight, to obtain the first value.

In some embodiments, the step of adjusting, by the page history information calculation unit 6221, the initial value according to the information type corresponding to the page history information includes:
in response to page history hit information being added to the page history information, decreasing the initial value correspondingly by a preset proportion, where a total number of times the initial value is decreased by the preset proportion corresponds to a total number of times the page history hit information is added; and
in response to page history conflict information and/or page history miss information being added to the page history information, increasing the initial value correspondingly by the preset proportion, where a total number of times the initial value is increased by the preset proportion corresponds to a total number of times the page history conflict information and/or the page history miss information is added.

In some embodiments, the second page policy determined by the page hit prediction unit 6222 includes an open page policy and a close page policy.

The step of comparing, by the page hit prediction unit 6222, the first value and the second value to determine the second page policy includes:
based on a forward calculation of a page hit, determining the open page policy in response to the first value being greater than or equal to the second value, and determining the close page policy in response to the first value being less than the second value; or
based on a reverse calculation of a page hit, determining the open page policy in response to the first value being less than the second value, and determining the close page policy in response to the first value being greater than or equal to the second value.

In some embodiments, the command acquisition unit is further configured to:
send the target access command to the page table to cause the page table to record access information corresponding to the target physical address, and compare whether a command type of the target access command is identical to a command type of a recorded history access command; and in response to the command type of the target access command being different from the command type of the recorded history access command, clear recorded access information corresponding to the history access command.

In some embodiments, the step of acquiring, by the command acquisition unit, the target access command in the command queue includes: acquiring the target access command from the access commands to be executed stored in the command queue according to access priority and/or address access efficiency of the access commands to be executed.

In some embodiments, the arbitration module 62 further includes a judgment unit (not shown in the figure).

The judgment unit is configured to judge whether the target memory page corresponding to the target access command is in an open state; if not, insert an Activate command before the target access command to open the corresponding target memory page.

In the embodiments of the present disclosure, when determining, by the arbitration module, the target page policy based on the acquired target access command, the access commands stored in the command queue and the page history information of the target physical address included in the target access command are comprehensively considered, which makes the determination of the target page policy more flexible, and thus enables dynamic adjustment of the memory page configuration. In turn, when generating the corresponding memory access command based on the target page policy, the latency of memory access can be reduced and the efficiency of memory access can be improved.

Furthermore, the embodiments of the present disclosure determine the target page policy by the arbitration module of the memory controller, so that the determination of the target page policy for memory accesses is achieved based on hardware without software intervention, which facilitates more convenient maintenance of the memory system.

Continuing to refer to Fig. 5, the memory controller in the embodiments of the present disclosure further includes a command generation module 64. The command generation module 64 may be configured to generate corresponding memory access commands, and the memory access commands may be read/write command sequences corresponding to DDR (Double Data Rate) memory. The arbitration module 62 can send a determined target page policy to the command generation module 64, so that the command generation module 64 can acquire the target page policy and then generate a corresponding memory access command based on the target page policy.

It should be noted that the command generation module 64 may further be configured to generate Activate commands and Precharge commands. For example, when the target memory page corresponding to the target access command is detected to be in a closed state, the command generation module may send an Activate command to the memory to open the target memory page corresponding to the target access command beforehand. Moreover, only in the case where the target memory page corresponding to the target access command is determined to be a page hit, the arbitration module 62 may perform the determination of the target page policy based on the target access command through the first determination unit, the second determination unit group, and the page policy determination unit. In the case where the target memory page corresponding to the target access command is determined by the command generation module to be a page hit, the arbitration module 62 notifies the command generation module 64 to generate a sequence including the Precharge command and the Activation command, and then sends the corresponding commands externally at an appropriate time according to the DDR protocol.

As an optional implementation, Fig. 6 illustrates another optional schematic flowchart of the method for memory page access provided by the embodiments of the present disclosure. The method may be performed and implemented by the memory controller, for example, specifically may be performed and implemented by the command generation module 64 in the memory controller. Referring to Fig. 6, the method includes the following steps.

Step S71: acquiring a target page policy.

The target page policy is one page policy determined by the arbitration module 62 from a first page policy and a second page policy, the first page policy is determined according to the physical address to be accessed and the target physical address, and the second page policy is determined according to the page history information.

The target physical address is based on the acquired target access command in a command queue 61, the target access command at least includes the target physical address corresponding to a target memory page, the command queue stores access commands to be executed, and the access commands to be executed include the physical address to be accessed corresponding to the memory page to be accessed.

The page history information is acquired from the page table 63 based on the corresponding target physical address.

Step S72: generating a corresponding memory access command based on the target page policy.

The command generation module 64, after acquiring the target page policy sent by the arbitration module 62, can generate the corresponding memory access command based on the target page policy, to send the memory access command to the memory to perform the access.

It should be noted that the command generation module 64 may further be configured to generate Activate commands and Precharge commands. For example, when the target memory page corresponding to the target access command is detected to be in a closed state, the command generation module 64 may send an Activate command to the memory to open the target memory page corresponding to the target access command beforehand. Moreover, only in the case where the target memory page corresponding to the target access command is determined to be a page hit, the arbitration module 62 may perform the determination of the target page policy based on the target access command through the first determination unit, the second determination unit group, and the page policy determination unit. In the case where the target memory page corresponding to the target access command is determined by the command generation module to be a page hit or a page miss, the arbitration module 62 does not perform the process of determining the target page policy for the target access command, and the arbitration module 62 is required to re-select the next target access command from the command queue.

In the method for memory page access of the embodiments of the present disclosure, a memory access command corresponding to the memory is generated based on the acquired target page policy, and the determination of the target page policy comprehensively considers the access commands stored in the command queue and the page history information of the target physical address included in the target access command, so that the execution of the generated memory access command can satisfy the current memory page configuration, thereby reducing the latency of memory access when executing memory access according to the memory access command, and improving the efficiency of memory access.

Based on the above-mentioned ideas, Fig. 7 exemplarily illustrates an optional schematic structural diagram of the command generation module provided by the embodiments of the present disclosure. As shown in Fig. 7, the command generation module includes a target policy acquisition unit 81 and a memory access command generation unit 82.

The target policy acquisition unit 81 is configured to acquire a target page policy. The target page policy is one page policy determined from a first page policy and a second page policy, the first page policy is determined according to a physical address to be accessed and a target physical address, and the second page policy is determined according to page history information; the target physical address is based on a target access command acquired in an command queue, the target access command at least includes the target physical address corresponding to a target memory page, the command queue stores access commands to be executed, the access commands to be executed include the physical address to be accessed corresponding to a memory page to be accessed, and the page history information is acquired in a page table based on the corresponding target physical address.

The memory access command generation unit 82 is configured to generate a corresponding memory access command based on the target page policy.

It should be noted that, to achieve the execution of the target access command, the memory access command generation unit 82 may further be configured to generate Activate commands and Precharge commands to open the corresponding target memory page beforehand.

The command generation module in the embodiments of the present disclosure generates a memory access command corresponding to the memory based on the acquired target page policy, and the determination of the target page policy comprehensively considers the access commands stored in the command queue and the page history information of the target physical address included in the target access command, so that the execution of the generated memory access command can satisfy the current memory page configuration, thereby reducing the latency of memory access when executing memory access according to the memory access command, and improving the efficiency of memory access.

The memory controller provided by the embodiments of the present disclosure may be shown with corresponding reference to Fig. 5, which includes an arbitration module and a command generation module.

The arbitration module is configured to: acquire a target access command in a command queue, the target access command at least includes a target physical address corresponding to a target memory page, the command queue stores access commands to be executed, and the access commands to be executed include a physical address to be accessed corresponding to a memory page to be accessed; acquire page history information corresponding to the target physical address in a page table; and send a target page policy based on the target physical address and the page history information.

The command generation module is configured to acquire the target page policy, and generate a corresponding memory access command based on the target page policy.

In some embodiments, the arbitration module may include a command acquisition unit, an information acquisition unit, a first determination unit, a second determination unit group, and a policy determination unit.

The command acquisition unit is configured to acquire a target access command in a command queue, the target access command at least includes a target physical address corresponding to a target memory page, the command queue stores access commands to be executed, and the access commands to be executed include a physical address to be accessed corresponding to a memory page to be accessed.

The information acquisition unit is configured to acquire page history information corresponding to the target physical address in a page table.

The first determination unit is configured to determine a first page policy according to the physical address to be accessed and the target physical address, and the first page policy indicates a hit decision for the memory page to be accessed corresponding to the target physical address.

The second determination unit group is configured to determine a second page policy according to the page history information, and the second page policy indicates a hit decision corresponding to the target memory page predicted based on the page history information.

The policy determination unit is configured to determine one page policy from the first page policy and the second page policy as a target page policy to be sent, to generate a corresponding memory access command based on the target page policy.

It should be noted that determining, by the arbitration module, the target page policy based on the target physical address and page history information and sending the target page policy may be performed and implemented based on the first determination unit, the second determination unit group, and the policy determination module. The specific functions and extended functions of the logical components within the arbitration module (e.g., the command acquisition unit, the information acquisition unit, the first determination unit, the second determination unit group, and the policy determination unit, etc.) may be referred to the description in the corresponding parts of the preceding sections, and do not be repeated herein.

In some embodiments, the command generation module may include a target policy acquisition unit and a memory access command generation unit.

The target policy acquisition unit is configured to acquire a target page policy. The target page policy is one page policy determined from a first page policy and a second page policy, the first page policy is determined according to a physical address to be accessed and a target physical address, and the second page policy is determined according to page history information; the target physical address is based on a target access command acquired in an command queue, the target access command at least includes the target physical address corresponding to a target memory page, the command queue stores access commands to be executed, the access commands to be executed include the physical address to be accessed corresponding to a memory page to be accessed, and the page history information is acquired in a page table based on the corresponding target physical address.

The memory access command generation unit is configured to generate a corresponding memory access command based on the target page policy.

It should be noted that the specific functions and extended functions of the logical components (e.g., the target policy acquisition unit, the memory access command generation unit, etc.) within the command generation module may be referred to the description in the corresponding parts of the preceding sections, and do not be repeated herein.

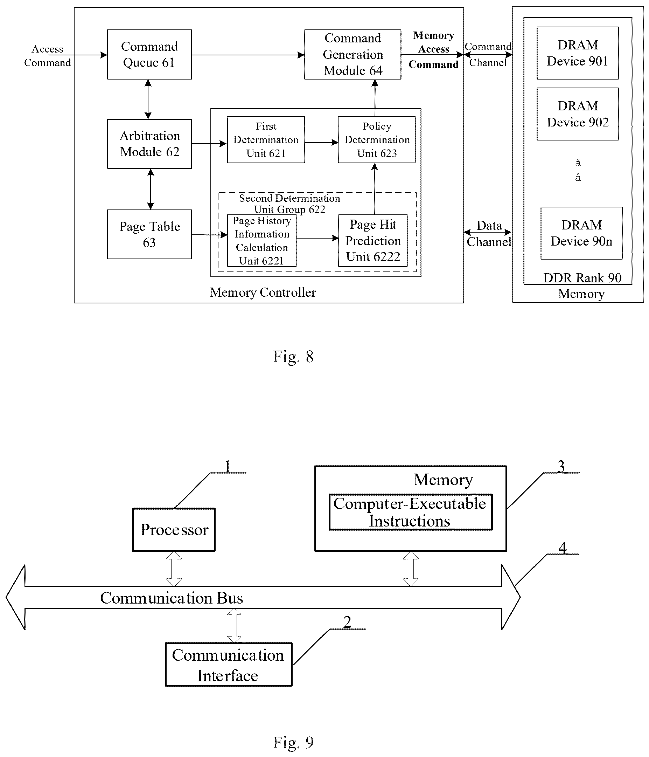

The embodiments of the present disclosure further provide a memory system, and Fig. 8 illustrates an optional schematic structural diagram of the memory system. The memory system may include the memory controller as described above, and the memory controller may be configured to perform the method for memory page access provided by the embodiments of the present disclosure.

Referring to Fig. 8, the memory system further includes a memory, which may be implemented by DDR (Double Data Rate) memory particles, and may include one or more groups of DDR Ranks. In DDR memory, each DDR rank may consist of a plurality of DRAM chips (DRAM Devices), and the plurality of DRAM Devices may share the same address and data bus. Each DDR Rank may be regarded as an independent memory module with independent address space and control logic, and may be read and written independently. In the memory controller, different memory modules may be accessed by selecting different DDR Ranks, thereby achieving parallel access to the plurality of DDR Ranks and improving memory bandwidth and performance. Fig. 8 is illustrated only with a group of DDR Rank 90, which consists of n DRAM Devices, namely DRAM Device 901, DRAM Device 902, ..., and DRAM Device 90n.

In the memory system shown in Fig. 8, information transmission between the memory controller and the memory is achieved through a memory bus. The memory bus is an electronic circuit used in a computer system for transmitting data and commands, connects the memory controller and the memory module, and includes a data bus and a command bus. The data bus is used for transmitting data to be read from the memory or needing to be written into the memory, which provides a data channel for the memory controller and the memory module; and the command bus is used for transmitting memory access commands related to memory operations, which provides a command channel for the memory controller and the memory module. The memory controller transmits memory access commands to the memory through the command channel to perform accesses to the memory.

The embodiments of the present disclosure further provide an electronic device which includes at least one memory and at least one processor. The memory stores one or more computer-executable instructions, and the at least one processor invokes the one or more computer-executable instructions to perform the method for memory page access provided by the embodiments of the present disclosure.

As an optional implementation, referring to Fig. 9, the electronic device includes at least one processor 1, at least one communication interface 2, at least one memory 3, and at least one communication bus 4.

In the embodiments of the present disclosure, the number of the processor 1, the communication interface 2, the memory 3, and the communication bus 4 is at least one, and the processor 1, the communication interface 2, and the memory 3 communicate with each other via the communication bus 4.

Optionally, the processor 1 may constitute a computer device together with the memory controller of the embodiments of the present disclosure, and the processor 1 may be a CPU (Central Processing Unit), a GPU (Graphics Processing Unit), an NPU (Embedded Neural Network Processor), an FPGA (Field Programmable Gate Array), a TPU (Tensor Processing Unit), an AI chip, an ASIC (Application Specific Integrated Circuit), one or more integrated circuits configured to implement the embodiments of the present disclosure, or the like.

Optionally, the communication interface 2 may be an interface of a communication module for performing network communication.

The memory 3 may include a high-speed RAM memory or may also include a nonvolatile memory, such as at least one disk memory. The memory 3 stores one or more computer-executable instructions, and the processor 1 invokes the one or more computer-executable instructions to perform the method for memory page access provided by the embodiments of the present disclosure.

The embodiments of the present disclosure further provide a storage medium, and the storage medium stores one or more computer executable instructions. The one or more computer executable instructions, when executed, implement the method for memory page access as described above.

The embodiments of the present disclosure further provide a computer program product including one or more computer-executable instructions, and the one or more computer-executable instructions, when executed, implement the method for memory page access as described above.

The foregoing describes a plurality of embodiments provided by the present disclosure, and the various optional ways introduced by the embodiments may be combined and cross-referenced with each other without conflict to extend a plurality of possible embodiments, which may be considered as embodiments disclosed by the present disclosure.

Although the embodiments of the present disclosure are disclosed as above, the present disclosure is not limited thereto. Any person skilled in the art may make various changes and modifications without departing from the spirit and scope of the present disclosure, and therefore the scope of protection of the present disclosure shall be subject to the scope limited by the claims.

## Claims

1. A method for memory page access, comprising:
acquiring a target access command in a command queue, wherein the target access command at least comprises a target physical address corresponding to a target memory page, the command queue stores access commands to be executed, and the access commands to be executed comprise a physical address to be accessed corresponding to a memory page to be accessed;
acquiring page history information corresponding to the target physical address in a page table;
determining a first page policy according to the physical address to be accessed and the target physical address, wherein the first page policy indicates a hit decision for the memory page to be accessed corresponding to the target physical address;
determining a second page policy according to the page history information, wherein the second page policy indicates a hit decision corresponding to the target memory page predicted based on the page history information; and
determining one page policy from the first page policy and the second page policy as a target page policy to be sent, to generate a corresponding memory access command based on the target page policy.

2. The method for memory page access according to claim 1, wherein the determining the first page policy according to the physical address to be accessed and the target physical address comprises:
comparing the physical address to be accessed with the target physical address to obtain an address comparison result; and
determining the first page policy based on the address comparison result.

3. The method for memory page access according to claim 2, wherein the physical address comprises a chip select address, a bank address, and a page address; and
the comparing the physical address to be accessed with the target physical address comprises:
comparing a chip select address in the physical address to be accessed with a chip select address in the target physical address, a bank address in the physical address to be accessed with a bank address in the target physical address, and a page address in the physical address to be accessed with a page address in the target physical address, respectively.

4. The method for memory page access according to claim 3, wherein the first page policy comprises an open page policy, a close page policy, and an unrelated policy;
if the chip select address, the bank address, and the page address in the physical address to be accessed are identical to the chip select address, the bank address, and the page address in the target physical address, the open page policy is determined;
if the chip select address and the bank address in the physical address to be accessed are identical to the chip select address and the bank address in the target physical address, but the page address in the physical address to be accessed is different from the page address in the target physical address, the close page policy is determined; and
if the chip select address in the physical address to be accessed is identical to the chip select address in the target physical address, but the bank address in the physical address to be accessed is different from the bank address in the target physical address, or if the chip select address in the physical address to be accessed is different from the chip select address in the target physical address, but the bank address in the physical address to be accessed is identical to the bank address in the target physical address, the unrelated policy is determined.

5. The method for memory page access according to claim 4, wherein the determining one page policy from the first page policy and the second page policy as the target page policy to be sent comprises:
in response to the first page policy having a higher priority than the second page policy, determining the first page policy from the first page policy and the second page policy as the target page policy to be sent.

6. The method for memory page access according to claim 5, wherein the determining one page policy from the first page policy and the second page policy as the target page policy to be sent further comprises:
in response to the first page policy being the unrelated policy, determining the second page policy from the first page policy and the second page policy as the target page policy to be sent.

7. The method for memory page access according to claim 1, wherein the determining the second page policy according to the page history information comprises:
determining a first value and a second value according to the page history information, wherein the first value is obtained by performing a weighted summation of the page history information with an information type corresponding to the page history information as a weight, and the second value is obtained by adjusting an initial value according to the information type corresponding to the page history information; and
comparing the first value and the second value to determine the second page policy.

8. The method for memory page access according to claim 7, wherein the page history information comprises page history hit information, page history conflict information, and page history miss information.

9. The method for memory page access according to claim 8, wherein when performing the weighted summation of the page history information to obtain the first value with the information type corresponding to the page history information as a weight,
if a page address of a previous access command of the target access command recorded in the page history information is identical to a page address of the target access command, a weight of the page history hit information is taken as a weight of the page history miss information to perform the weighted summation of the page history information with the information type corresponding to the page history information as a weight, to obtain the first value; or
if the page address of the previous access command of the target access command recorded in the page history information is different from the page address of the target access command, a weight of the page history conflict information is taken as the weight of the page history miss information to perform the weighted summation of the page history information with the information type corresponding to the page history information as a weight, to obtain the first value.

10. The method for memory page access according to claim 7, wherein the adjusting the initial value according to the information type corresponding to the page history information comprises:
in response to page history hit information being added to the page history information, decreasing the initial value correspondingly by a preset proportion, wherein a total number of times the initial value is decreased by the preset proportion corresponds to a total number of times the page history hit information is added; and
in response to page history conflict information and/or page history miss information being added to the page history information, increasing the initial value correspondingly by the preset proportion, wherein a total number of times the initial value is increased by the preset proportion corresponds to a total number of times the page history conflict information and/or the page history miss information is added.

11. The method for memory page access according to claim 10, wherein the second page policy comprises an open page policy and a close page policy; and
the comparing the first value and the second value to determine the second page policy comprises:
based on a forward calculation of a page hit, determining the open page policy in response to the first value being greater than or equal to the second value, and determining the close page policy in response to the first value being less than the second value; or
based on a reverse calculation of a page hit, determining the open page policy in response to the first value being less than the second value, and determining the close page policy in response to the first value being greater than or equal to the second value.

12. The method for memory page access according to any one of claims 1-11, wherein while performing the acquiring the target access command in the command queue, the method further comprises:
sending the target access command to the page table to cause the page table to record access information corresponding to the target physical address, and comparing whether a command type of the target access command is identical to a command type of a recorded history access command; and
in response to the command type of the target access command being different from the command type of the recorded history access command, clearing recorded access information corresponding to the history access command.

13. The method for memory page access according to any one of claims 1-12, wherein the acquiring the target access command in the command queue comprises:
acquiring the target access command from the access commands to be executed stored in the command queue according to access priority and/or address access efficiency of the access commands to be executed.

14. An arbitration module, comprising:
a command acquisition unit, configured to acquire a target access command in a command queue, wherein the target access command at least comprises a target physical address corresponding to a target memory page, the command queue stores access commands to be executed, and the access commands to be executed comprise a physical address to be accessed corresponding to a memory page to be accessed;
an information acquisition unit, configured to acquire page history information corresponding to the target physical address in a page table;
a first determination unit, configured to determine a first page policy according to the physical address to be accessed and the target physical address, wherein the first page policy indicates a hit decision for the memory page to be accessed corresponding to the target physical address;
a second determination unit group, configured to determine a second page policy according to the page history information, wherein the second page policy indicates a hit decision corresponding to the target memory page predicted based on the page history information; and
a policy determination unit, configured to determine one page policy from the first page policy and the second page policy as a target page policy to be sent, to generate a corresponding memory access command based on the target page policy.

15. The arbitration module according to claim 14, wherein determining, by the first determination unit, the first page policy according to the physical address to be accessed and the target physical address comprises:
comparing the physical address to be accessed with the target physical address to obtain an address comparison result; and
determining the first page policy based on the address comparison result.

16. The arbitration module according to claim 15, wherein the second determination unit group comprises a page history information calculation unit and a page hit prediction unit;
the page history information calculation unit is configured to determine a first value and a second value according to the page history information, wherein the first value is obtained by performing a weighted summation of the page history information with an information type corresponding to the page history information as a weight, and the second value is obtained by adjusting an initial value according to the information type corresponding to the page history information; and
the page hit prediction unit is configured to compare the first value and the second value to determine the second page policy.

17. The arbitration module according to claim 14, wherein the command acquisition unit is further configured to:
send the target access command to the page table to cause the page table to record access information corresponding to the target physical address, and compare whether a command type of the target access command is identical to a command type of a recorded history access command; and in response to the command type of the target access command being different from the command type of the recorded history access command, clear recorded access information corresponding to the history access command.

18. A method for memory page access, comprising:
acquiring a target page policy, wherein the target page policy is one page policy determined from a first page policy and a second page policy, the first page policy is determined according to a physical address to be accessed and a target physical address, and the second page policy is determined according to page history information; the target physical address is based on a target access command acquired in an command queue, the target access command at least comprises the target physical address corresponding to a target memory page, the command queue stores access commands to be executed, the access commands to be executed comprise the physical address to be accessed corresponding to a memory page to be accessed, and the page history information is acquired in a page table based on the corresponding target physical address; and
generating a corresponding memory access command based on the target page policy.

19. A command generation module, comprising:
a target policy acquisition unit, configured to acquire a target page policy, wherein the target page policy is one page policy determined from a first page policy and a second page policy, the first page policy is determined according to a physical address to be accessed and a target physical address, and the second page policy is determined according to page history information; the target physical address is based on a target access command acquired in an command queue, the target access command at least comprises the target physical address corresponding to a target memory page, the command queue stores access commands to be executed, the access commands to be executed comprise the physical address to be accessed corresponding to a memory page to be accessed, and the page history information is acquired in a page table based on the corresponding target physical address; and
a memory access command generation unit, configured to generate a corresponding memory access command based on the target page policy.

20. A memory controller, comprising an arbitration module and a command generation module, wherein
the arbitration module is configured to: acquire a target access command in a command queue, wherein the target access command at least comprises a target physical address corresponding to a target memory page, the command queue stores access commands to be executed, and the access commands to be executed comprise a physical address to be accessed corresponding to a memory page to be accessed; acquire page history information corresponding to the target physical address in a page table; and send a target page policy based on the target physical address and the page history information; and
the command generation module is configured to acquire the target page policy, and generate a corresponding memory access command based on the target page policy.

21. A memory system, comprising a memory controller according to claim 20.

22. An electronic device, comprising at least one memory and at least one processor, wherein
the at least one memory stores one or more computer-executable instructions, and the at least one processor invokes the one or more computer-executable instructions to perform the method for memory page access according to any one of claims 1-13, or to perform the method for memory page access according to claim 18.

23. A storage medium, storing one or more computer-executable instructions, wherein the one or more computer-executable instructions, when executed, implement the method for memory page access according to any one of claims 1-13, or the method for memory page access according to claim 18.

24. A computer program product, comprising one or more computer-executable instructions, wherein the one or more computer-executable instructions, when executed, implement the method for memory page access according to any one of claims 1-13, or the method for memory page access according to claim 18.
